# FASCICULE DE BREVET EUROPEEN

(11) **EP 0 760 546 B1**
(45) Date de publication et mention de la délivrance du brevet: **22.11.2000**
(21) Numéro de dépôt: 96401814.7
(22) Date de dépôt: 23.08.1996
(51) Int. Cl.: H02B 1/32

(54) **Châssis de support, notamment pour appareillages électriques**
Befestigungsgestell, insbesondere für elektrische Apparate
Support chassis, especially for electrical apparatus

(30) Priorité: 25.08.1995 FR 9510092
(43) Date de publication de la demande: 05.03.1997
(73) Titulaire: LEGRAND, F-87045 Limoges Cédex (FR); LEGRAND SNC, F-87045 Limoges (FR)
(72) Inventeur: Houard, Fabrice, 76750 Buchy (FR)
(74) Mandataire: CABINET BONNET-THIRION

(56) Documents cités:
- EP-A- 0 012 209
- EP-A- 0 237 410
- DE-A- 2 630 280
- DE-A- 2 746 545
- DE-U- 8 614 160
- FR-A- 2 097 543
- FR-A- 2 110 336

## Description

La présente invention concerne d'une manière générale les châssis du type de ceux mis en oeuvre pour le support d'un quelconque équipement, et, par exemple, d'appareillages électriques, au sein, ou non, d'une armoire.

Elle vise plus particulièrement ceux de ces châssis, dits ci-après châssis de support, qui comportent, globalement, à la manière d'une échelle, d'une part, deux montants, qui sont globalement parallèles l'un à l'autre, et, d'autre part, au moins un barreau, qui s'étend globalement transversalement par rapport aux montants, qu'il s'agisse par exemple d'un rail de type normalisé permettant la mise en place par simple encliquetage de l'équipement à porter, ou qu'il s'agisse d'une traverse présentant des perçages taraudés pour la fixation par vissage de cet équipement, avec, pour l'assujettissement d'un tel barreau à l'un au moins des montants, une pièce, dite ci-après, par simple commodité, entretoise de support, comportant, elle-même, globalement en équerre l'une par rapport à l'autre, deux ailes, à savoir, une aile de fixation, par laquelle elle est assujettie au montant, et une aile de support, à laquelle est assujetti le barreau.

Un châssis de ce type est décrit dans le document DE-A-2630280. Selon l'enseignement de ce document en outre, le montant présente une face avant ajourée localement d'au moins un évidement et l'aile de fixation de l'entretoise de support comporte au moins une patte de retenue, qui, pour le crochetage de cette entretoise de support sur le montant, est engagée sous la face avant de ce montant à la faveur de l'évidement de celle-ci.

Le plus souvent, à ce jour, l'assujettissement de l'entretoise de support au montant se fait par vissage.

l'entretoise de support au montant se fait par vissage. Il en résulte, pour l'ensemble du châssis de support, une multiplication dispendieuse des points de vissage, au détriment du temps de montage nécessaire à l'assemblage de ce châssis de support.

Il en est d'autant plus ainsi que, fréquemment, certains de ces points de vissage interviennent de l'avant vers l'arrière, et d'autres de l'arrière vers l'avant.

La présente invention a d'une manière générale pour objet une disposition permettant de réduire le temps de montage du châssis de support et conduisant en outre à d'autres avantages.

De manière plus précise, elle a pour objet un châssis de support comportant, d'une part, deux montants, qui sont globalement parallèles l'un à l'autre, et, d'autre part, au moins un barreau, qui s'étend globalement transversalement, par rapport auxdits montants, avec, pour l'assujettissement dudit barreau à l'un, au moins, de ces montants, une entretoise de support comportant, globalement, en équerre l'une par rapport à l'autre, deux ailes, à savoir, une aile de fixation, par laquelle elle est assujettie audit montant, et une aile de support, à laquelle est assujetti ledit barreau, le montant présentant une face avant ajourée localement d'au moins un évidement, et l'aile de fixation de l'entretoise de support comportant au moins une patte de retenue, qui, pour le crochetage de cette entretoise de support sur le montant, est engagée sous la face avant de ce montant à la faveur de l'évidement de celle-ci, l'aile de fixation de l'entretoise de support comportant, parallèlement à la patte de retenue, au moins une patte de maintien, qui s'étend dans le même sens que cette patte de retenue, et par laquelle cette entretoise de support porte sur la face avant du montant, avec, en pratique, une alternance de pattes de retenue et de pattes de maintien.

Ainsi, la mise en place de l'entretoise de support sur le montant n'implique avantageusement aucun vissage.

Il suffit, en effet, d'engager cette entretoise de support par sa patte de retenue dans l'évidement de la face avant du montant, perpendiculairement à cette face avant, puis de la faire coulisser parallèlement à cette face avant jusqu'à ce que cette patte de retenue vienne se prendre sous celle-ci.

Autrement dit, l'entretoise de support suivant l'invention est simplement embrochée par sa patte de retenue sur le montant auquel elle est assujettie, son maintien par rapport à ce montant se trouvant assuré par le fait que le barreau qui lui est assujetti se trouve conjointement assujetti à l'autre montant à son autre extrémité, soit par l'intermédiaire d'une entretoise de support de même type, soit en vertu d'autres dispositions.

Il en résulte, dans tous les cas, une grande facilité et une grande rapidité de montage.

Il en résulte, également, une grande souplesse d'intervention lors d'éventuelles modifications du châssis de support.

Grâce à une telle disposition, la face avant du montant se trouvant en quelque sorte pincée entre, d'une part, les pattes de retenue de l'entretoise de support, qui interviennent sur sa surface arrière, et, d'autre part, les pattes de maintien de cette entretoise de support, qui interviennent sur sa surface avant.

En pratique, ce pincement est avantageusement suffisant pour assurer par lui-même un maintien provisoire satisfaisant de l'entretoise de support sur le montant avant même la mise en place du barreau verrouillant ensuite l'ensemble.

Le montage du châssis de support s'en trouve avantageusement facilité.

Préférentiellement, également, l'entretoise de support est une pièce métallique.

Elle est ainsi particulièrement solide.

Lorsque l'équipement à porter comporte des appareillages électriques, elle est en outre avantageusement à même d'assurer par elle-même une continuité électrique entre ces appareillages électriques et le châssis de support, au bénéfice de l'obtention d'un même potentiel de référence pour l'ensemble.

Préférentiellement, enfin, il est associé à l'entretoise de support un gabarit de positionnement facilitant sa mise en place sur un montant.

Il peut s'agir par exemple d'une simple réglette en carton ou autre matériau en feuille rapportée de manière amovible sur son aile de fixation.

Les caractéristiques et avantages de l'invention ressortiront d'ailleurs de la description qui va suivre, à titre d'exemple, en référence aux dessins schématiques annexés sur lesquels :
la figure 1 est une vue en perspective d'un châssis de support suivant l'invention ;
la figure 2 est une vue en perspective d'un des montants que comporte ce châssis ;
les figures 3 et 4 reprennent, chacune respectivement, à échelle supérieure, les détails qui, relatifs à ce montant, sont repérés par des encarts III et IV sur la figure 1 ;
la figure 5 est une vue en perspective d'une entretoise de support mise en oeuvre dans le châssis de support suivant l'invention ;
la figure 6 est, à échelle supérieure, une vue en coupe transversale de cette entretoise de support, suivant la ligne VI-VI de la figure 5 ;
la figure 7 est une vue partielle en perspective qui, déduite de celle de la figure 1, illustre la mise en place de cette entretoise de support sur un montant ;
la figure 8 est une vue en perspective d'une variante de réalisation de barreau susceptible d'être mise en oeuvre dans le châssis de support suivant l'invention ;
la figure 9 est une vue en perspective d'une variante de réalisation de l'entretoise de support plus particulièrement adaptée à cette variante de réalisation de barreau ;
la figure 10 est une vue en perspective d'une pièce de support alors associée à cette entretoise de support ;
les figures 11 et 12 sont des vues en perspective illustrant le montage de cette pièce de support suivant l'une ou l'autre de deux orientations différentes ;
la figure 13 est une vue en perspective partielle qui, analogue à celle de la figure 1, se rapporte à une variante de réalisation des montants ;
la figure 14 est une vue en perspective qui, analogue à celle de la figure 5, se rapporte à une variante de réalisation de l'entretoise de support ;
la figure 15 est une vue partielle en perspective, qui, analogue à celle de la figure 13, se rapporte à une variante de réalisation de l'entretoise de support ;
la figure 16 est une vue partielle de dessus du châssis de support correspondant, suivant la flèche XVI de la figure 15 ;
la figure 17 est une vue en perspective éclatée de cette variante de réalisation de l'entretoise de support et de la pièce de support qui lui est associée, vues de l'avant ;
la figure 18 en est une autre vue en perspective éclatée, vues de l'arrière ;
la figure 19 est une vue en perspective qui, analogue à celle de la figure 1, se rapporte à une autre variante de réalisation du châssis de support suivant l'invention ;
la figure 20 est une vue en perspective d'un tableau mis en oeuvre dans cette variante de réalisation.

Tel qu'illustré sur ces figures, le châssis de support 10 suivant l'invention, qui est éventuellement implanté dans une quelconque armoire, non représentée, comporte, globalement, à la manière d'une échelle, pour le support d'un quelconque équipement à loger dans cette armoire, et, notamment, pour celui d'appareillages électriques de type divers également non représentés, d'une part, deux montants 11, qui sont globalement parallèles l'un à l'autre, à distance l'un de l'autre, en étant en pratique disposés verticalement, et, d'autre part, au moins un barreau 12, qui s'étend globalement transversalement par rapport aux montants 11, orthogonalement à ceux-ci, avec, pour l'assujettissement de ce barreau 12 à l'un, au moins, de ces montants 11, une entretoise de support 13, comportant, elle-même, globalement, en équerre l'une par rapport à l'autre, suivant des dispositions décrites plus en détail ultérieurement, deux ailes, à savoir, une aile de fixation 14, par laquelle elle est assujettie à un tel montant 11, et une aile de support 15, à laquelle est assujetti le barreau 12.

L'aile de support 15 s'étend globalement transversalement par rapport au barreau 12.

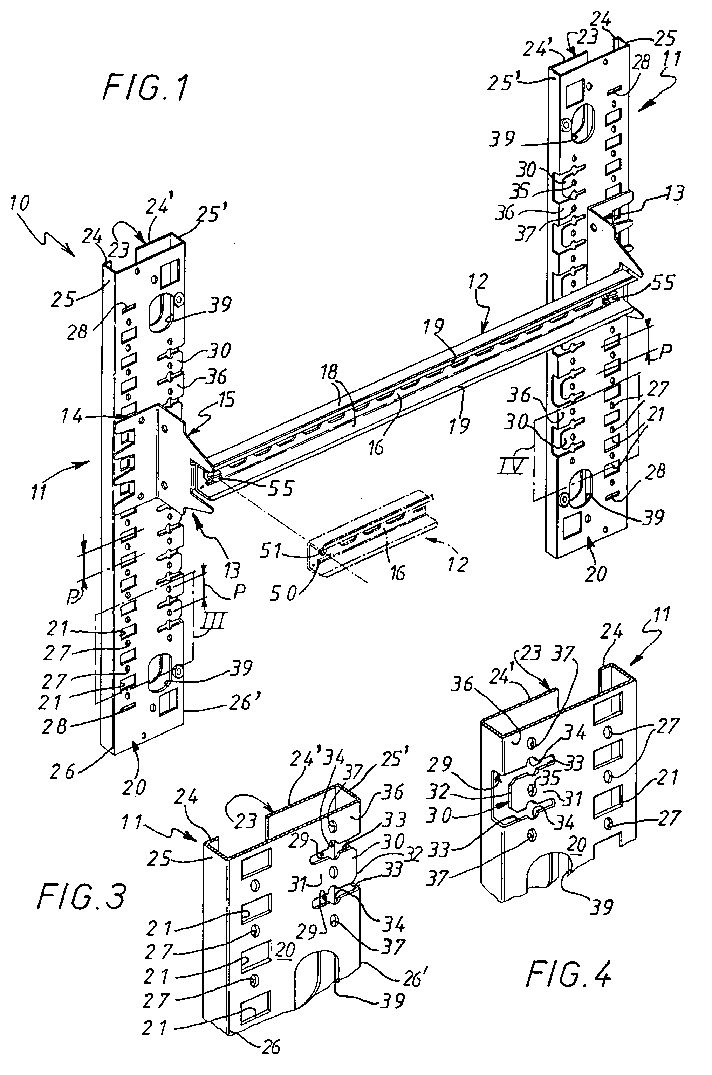

Dans la forme de réalisation plus particulièrement représentée sur les figures 1 à 7, le barreau 12 est, à titre d'exemple, un rail de type normalisé propre à une mise en place par simple encliquetage de l'équipement à porter.

Par exemple, et tel que représenté, il s'agit d'un rail à section transversale en U comportant une partie médiane 16 et deux ailes latérales 18 qui, de même hauteur, sont chacune respectivement munies d'un retour en équerre 19, dirigé vers l'extérieur, le long de leur bord libre.

Les dispositions correspondantes étant bien connues par elles-mêmes, elles ne seront pas décrites plus en détail ici.

Dans la forme de réalisation représentée, le barreau 12 s'étend globalement de l'un à l'autre des deux montants 11, en étant assujetti à chacun d'eux par une entretoise de support 13 à ses extrémités.

En outre, dans cette forme de réalisation, les deux montants 11 sont identiques entre eux, en étant disposés symétriquement l'un par rapport à l'autre par rapport à un plan médian qui, perpendiculaire au barreau 12, passe par la zone médiane de celui-ci.

Il en est de même pour les entretoises de support 13.

En pratique, plusieurs barreaux 12 sont usuellement échelonnés en hauteur le long des montants 11.

Les montants 11 présentent une face avant 20 ajourée localement d'au moins un évidement 21, et l'aile de fixation 14 des entretoises de support 13 comporte au moins une patte de retenue 22, qui, pour le crochetage d'une telle entretoise de support 13 sur un tel montant 11, est engagée sous la face avant 20 de ce montant 11 à la faveur de l'évidement 21 de celle-ci.

Dans la forme de réalisation plus particulièrement représentée sur les figures 1 à 7, les montants 11 sont des profilés à section transversale en U, dont la partie médiane forme la face avant 20, et dont la face arrière 23 est formée par des retours en équerre 24, 24' que présentent en direction l'une de l'autre ses ailes latérales 25, 25'.

Les ailes latérales 25, 25' ont des hauteurs égales, mais le retour en équerre 24 de l'aile latérale 25 externe, qui est celle la plus éloignée du montant 11 opposé, a une largeur inférieure à celle du retour en équerre 24' de l'aile latérale 25' interne, qui est celle la plus proche de ce montant 11 opposé.

Globalement, la section transversale, rectangulaire, des montants 11 est largement étirée, la largeur de la face avant 20 de ces montants 11 étant largement supérieure à la hauteur de leurs ailes latérales 25, 25'.

Dans la forme de réalisation représentée, l'évidement 21 a un contour rectangulaire, et il est allongé parallèlement au barreau 12, et, donc, perpendiculairement à la direction d'allongement des montants 11.

En pratique, la face avant 20 des montants 11 présente, suivant un pas P régulier, une pluralité d'évidements 21.

Ils sont alignés suivant sa direction d'allongement, au voisinage de son arête externe 26, qui est celle qu'elle forme avec l'aile latérale 25 externe, et ils s'étendent en pratique à distance de cette arête externe 26.

Dans la forme de réalisation représentée, les évidements 21 alternent avec des perçages 27, de contour circulaire, propres au passage d'un quelconque moyen de fixation permettant, si désiré, d'assujettir, à cet endroit, aux montants 11, un quelconque équipement, et, par exemple, une goulotte, non représentée, disposée verticalement.

Pour des raisons qui apparaîtront ci-après, il est prévu, à chacune des extrémité de l'alignement des évidements 21 et des perçages 27, un repère 28.

Par exemple, et tel que représenté, il s'agit d'une simple boutonnière allongée perpendiculairement à la direction d'allongement des montants 11.

Le long de l'arête interne 26' de leur face avant 20, qui est l'arête que cette face avant 20 forme avec leur aile ou face latérale 25' interne, les montants 11 forment, localement, à la faveur d'au moins une découpe 29 qui mord sur cette aile ou face latérale 25' interne, au moins une patte 30, qui, de sa racine 31 à son extrémité libre 32, s'étend en direction du montant 11 opposé.

En pratique, cette patte 30 s'étend dans le plan de la face avant 20.

L'une au moins des fentes 33 qui séparent latéralement cette patte 30 des flancs de la découpe 29 à la faveur de laquelle elle est formée, et, en pratique, chacune de ces fentes 33, présente, localement, à mi-longueur de la patte 30, un épanouissement formant globalement un perçage 34.

En pratique, les montants 11 présentent, suivant un pas P régulier, qui est le même que celui des évidements 21, une pluralité de pattes 30, qui sont alignées suivant leur direction d'allongement, et qui sont disposées chacune respectivement à niveau avec les évidements 21.

De même, les perçages 34 sont alignés avec les perçages 27.

Dans la forme de réalisation représentée, les pattes 30 présentent elles-mêmes chacune un perçage 35, et les parties pleines 36 avec lesquelles elles alternent, présentent elles-mêmes chacune un perçage 37.

Les perçages 35 et/ou les perçages 37 son propres au passage d'un quelconque moyen de fixation permettant, si désiré, d'assujettir, à cet endroit, aux montants 11, un quelconque équipement, et, par exemple, une goulotte, non représentée, disposée horizontalement.

Quant aux perçages 34, ils permettent, chacun, si désiré, l'intervention d'une agrafe, non représentée, porteuse d'un écrou, et, propre, ainsi, à n'importe quelle fixation.

Dans la forme de réalisation représentée, il est prévu, à chacune des extrémités de l'alignement des pattes 30, un large évidement 39, allongé en boutonnière suivant la direction d'allongement des montants 11, pour la mise en oeuvre de moyens de fixation propres à l'assujettissement de ces montants 11 à un quelconque support, et, par exemple, au fond de l'armoire éventuellement concernée.

Les dispositions correspondantes ne relevant pas de la présente invention, elles ne seront pas décrites ici.

Dans les formes de réalisation représentées, l'aile de fixation 14 des entretoises de support 13 s'étend dans le sens opposé au barreau 12.

De sa racine 40 à son extrémité libre 42, la patte de retenue 22 que forme cette aile de fixation 14 s'étend elle-même dans le sens opposé à ce barreau 12.

En pratique, cette patte de retenue 22 est décalée transversalement par rapport au plan de l'aile de fixation 14.

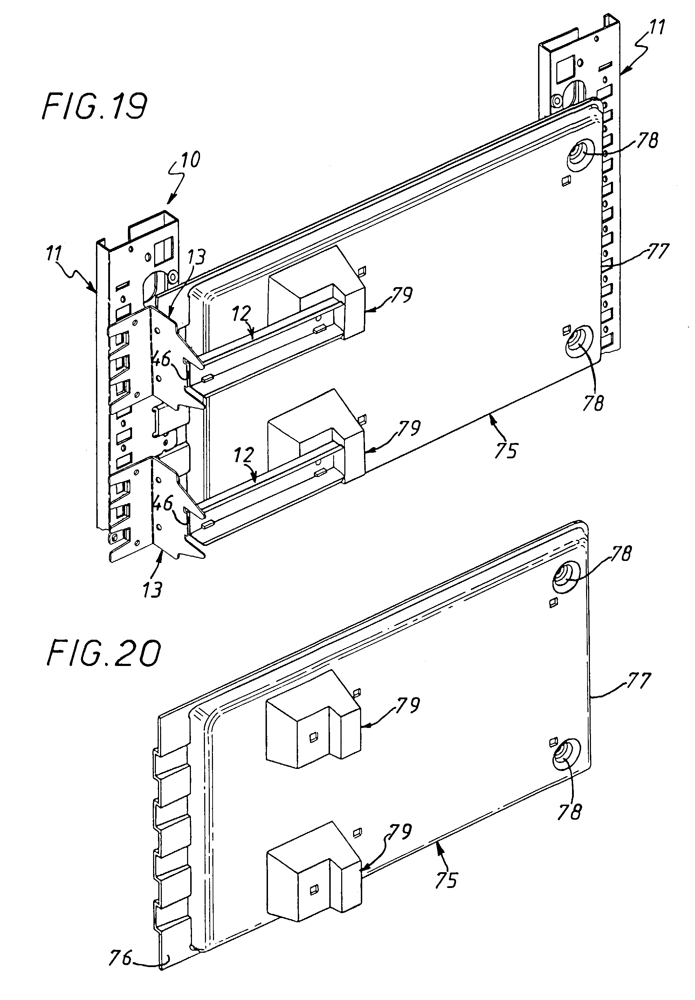

Dans les formes de réalisation plus particulièrement représentées sur les figures 1 à 14, ainsi que sur les figures 19 et 20, elle se situe de l'autre côté de l'aile de fixation 14 par rapport à l'aile de support 15.

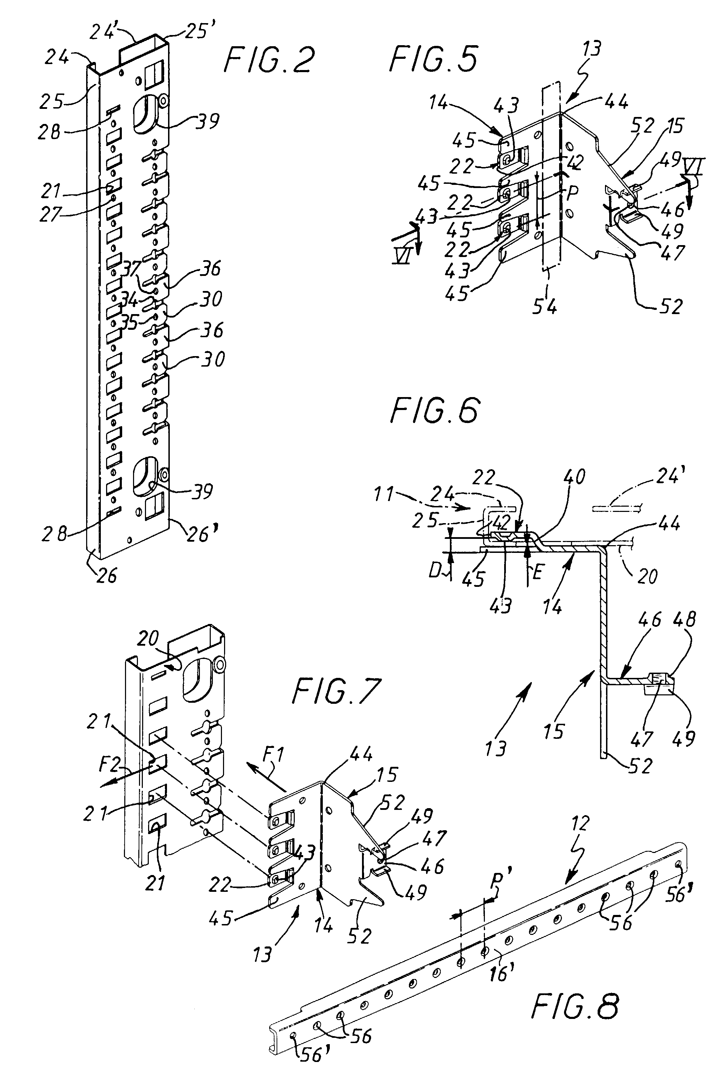

Le décalage D correspondant, figure 6, est sensiblement égal à l'épaisseur E de la face avant 20 des montants 11, tout en étant légèrement supérieur à cette épaisseur E.

Préférentiellement, et tel que représenté, pour contact avec un montant 11, la patte de retenue 22 présente, en saillie, sur sa surface tournée vers la surface arrière de la face avant 20 de ce montant 11, au moins un bossage 43.

Dans les formes de réalisation représentées, un bossage 43 unique est prévu, et il est allongé transversalement par rapport à la patte de retenue 22.

Chaque entretoise de support 13 étant en pratique formée par découpe et mise en forme d'un flan métallique, ce bossage 43 résulte de l'emboutissage de ce flan.

En pratique, également, l'aile de fixation 14 des entretoises de support 13 présente plusieurs pattes de retenue 22, alignées parallèlement à l'arête 44 qu'elle forme avec l'aile de support 15, suivant un pas P régulier qui, bien entendu, est égal à celui des évidements 21 de la face avant 20 des montants 11.

Par exemple, et tel que représenté, trois pattes de retenue 22 sont ainsi prévues sur cette aile de fixation 14.

Dans les formes de réalisation représentées, l'aile de fixation 14 des entretoises de support 13 comporte, parallèlement aux pattes de retenue 22, au moins une patte de maintien 45, qui s'étend dans le même sens que ces pattes de retenue 22, et par laquelle chaque entretoise de support 13 porte sur la face avant 20 du montant 11 sur lequel elle est rapportée.

En pratique, cette patte de maintien 45 s'étend suivant le plan de l'aile de fixation 14, en prolongeant localement celle-ci à la manière d'une dent.

En pratique, également, l'aile de fixation 14 des entretoises de support 13 comporte plusieurs pattes de maintien 45, en sorte que chaque patte de retenue 22 est encadrée par deux pattes de maintien 45.

Dans les formes de réalisation représentées, les découpes à la faveur desquelles ont été formées les pattes de retenue 22 ont un contour trapézoïdal, et les pattes de maintien 45 intermédiaires ont un contour triangulaire.

Pour la fixation du barreau 12, l'aile de support 15 des entretoises de support 13 comporte, en saillie, une patte de support 46.

Dans la forme de réalisation plus particulièrement représentée sur les figures 1 à 7, cette patte de support 46 est d'un seul tenant avec l'aile de support 15 qui la porte, et elle s'étend d'équerre avec celle-ci, du côté de cette aile de support 15 opposé à l'aile de fixation 14.

Pour l'intervention d'une vis propre à la fixation du barreau 12, la patte de support 46 présente, dans sa zone médiane, un perçage taraudé 47, qui, en pratique, est prolongé à la faveur d'un soyage 48 en saillie sur sa surface tournée du côté de l'aile de fixation 14.

Elle présente, en outre, en saillie sur sa surface tournée du côté opposé à cette aile de fixation 14, au moins un ergot 49, pour l'emboîtement local du barreau 12.

En pratique, dans la forme de réalisation représentée, deux ergots 49 sont prévus, qui s'étendent chacun respectivement le long des bords latéraux de la patte de support 46, de part et d'autre du perçage taraudé 47.

En correspondance, il est prévu deux fentes 50 sur la partie médiane 16 du barreau 12, de part et d'autre d'un perçage 51, tel que schématisé en traits interrompus sur la figure 1.

Enfin, dans la forme de réalisation représentée sur les figures 1 à 7, l'aile de support 15 de l'entretoise de support 13 comporte, localement, au moins un prolongement 52, qui s'étend au-delà de la patte de support 46 par rapport à son aile de fixation 14.

Par exemple, et tel que représenté, deux prolongements 52 sont prévus, en étant chacun respectivement disposés de part et d'autre de la patte de support 46.

Ces prolongements 52, qui s'étendent en pratique suivant le plan de l'aile de support 15, en ayant chacun un contour triangulaire, assurent avantageusement en service une fonction de butée latérale à l'égard de l'équipement porté par le barreau 12.

Pour la mise en place d'une entretoise de support 13 sur un montant 11, cette entretoise de support 13 est engagée, par ses pattes de retenue 22, dans des évidements 21 de la face avant 20 de ce montant 11, perpendiculairement à cette face avant 20, suivant la flèche F1 de la figure 7, puis, après contact de son aile de fixation 14, et, notamment, des pattes de maintien 45 formées par celle-ci, avec cette face avant 20, elle est coulissée parallèlement à cette face avant 20, suivant la flèche F2 de la figure 7, jusqu'à ce que les pattes de retenue 22 s'engagent au moins partiellement sous cette face avant 20, tel que schématisé en traits interrompus sur la figure 6.

En pratique, la face avant 20 du montant 11 se trouve alors pincée entre les pattes de retenue 22 et les pattes de maintien 45, le bossage 43 des pattes de retenue 22 permettant un rattrapage des inévitables tolérances de fabrication, compte tenu de l'élasticité de ces pattes de retenue 22 et de celle des pattes de maintien 45.

Il en résulte que, ainsi embrochée à frottement sur le montant 11, l'entretoise de support 13 se maintient d'elle-même sur celui-ci, ce qui facilite la mise en place ultérieure du barreau 12.

Pour faciliter l'implantation de l'entretoise de support 13 à un niveau donné sur le montant 11, il peut être associé, à cette entretoise de support 13, un gabarit de positionnement 54, tel que schématisé en traits interrompus sur la figure 5.

Il s'agit, par exemple, d'une simple réglette en carton, ou autre matériau en feuille, rapportée de manière amovible, par exemple par collage à l'aide d'un simple matériau adhésif, sur l'aile de fixation 14, le long de l'arête 44.

Ce gabarit de positionnement 54, de longueur appropriée, permet de repérer la position de l'entretoise de support 13 par rapport à l'un des repères 28 du montant 11, et il est procédé ainsi, d'une entretoise de support 13 à l'autre, sur toute la hauteur de ce montant 11.

Suivant les espacements choisis d'un barreau 12 à un autre, la longueur des gabarits de positionnement 54 est différente.

Lorsque deux entretoises de support 13 ont ainsi été implantées à un même niveau sur l'un et l'autre des montants 11, il est procédé à la mise en place du barreau 12, en mettant en pratique en oeuvre une vis 55 à l'une et l'autre des extrémités de celui-ci, figure 1.

Lors de cette mise en place, l'une et/ou l'autre des entretoises de support 13 peuvent être déplacées transversalement par rapport aux montants 11, pour adapter leur écartement à la longueur du barreau 12.

Mais, une fois le barreau 12 en place, l'ensemble ne peut plus échapper aux montants 11.

Bien entendu, suivant la profondeur désirée pour l'implantation du barreau 12 par rapport aux montants 11, il peut être prévu des entretoises de support 13 différentes, variant de l'une à l'autre par la distance séparant de leur aile de fixation 14 la patte de support 46 que comporte leur aile de support 15 et/ou par la hauteur de cette aile de support 15.

Au lieu d'être rapporté directement sur des entretoises de support 13, le barreau 12 peut, en variante, et suivant des dispositions non représentées, être rapporté sur des longrines, en forme de cornière par exemple, qui, courant parallèlement aux montants 11, sont chacune rapportées, par exemple par vissage, sur deux entretoises de support 13.

Dans la variante de réalisation représentée sur la figure 8, le barreau 12 est une traverse, dont la section transversale est en U, comme précédemment, mais avec la concavité tournée du côté des montants 11, et dont la partie médiane 16' présente, de place en place, suivant un pas P' régulier, pour une fixation par vissage de l'équipement concerné, des perçages taraudés 56, avec, à chacune de ses extrémités, un perçage lisse 56', pour le passage d'une vis 55.

Ce barreau 12 peut lui aussi être rapporté sur des entretoises de support 13 du même type que les précédentes.

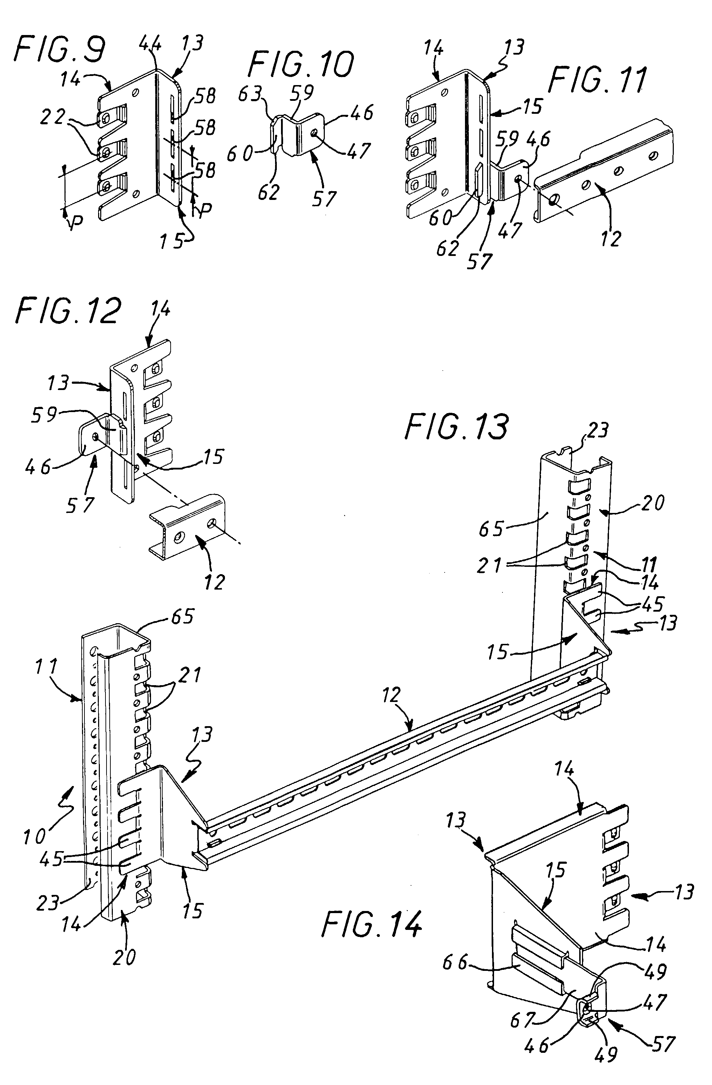

Mais, préférentiellement, et suivant la forme de réalisation représentée sur les figures 9 à 12, la patte de support 46 de ces entretoises de support 13 appartient, alors, à une pièce de support 57, qui, distincte de leur aile de support 15, est crochetée sur cette aile de support 15 à la faveur d'une boutonnière 58 prévue à cet effet sur celle-ci.

Dans la forme de réalisation représentée, la pièce de support 57 comporte, en équerre l'une par rapport à l'autre, deux pattes, à savoir, d'une part, la patte de support 46, qui, comme précédemment, présente un perçage taraudé 47, et, d'autre part, une patte de fixation 59, qui, pour son crochetage sur l'aile de support 15 d'une entretoise de support 13, présente un retour 60 formant, localement, un crochet 62.

Pour faciliter son engagement dans une boutonnière 58 de l'aile de support 15 d'une entretoise de support 13, l'angle du retour 60 opposé au crochet 62 est abattu par un chanfrein 63.

Dans la forme de réalisation représentée sur les figures 9 à 12, l'aile de support 15 de l'entretoise de support 13 a un simple contour rectangulaire.

Préférentiellement, plusieurs boutonnières 58 y sont prévues.

Elles y sont alignées suivant leur longueur, parallèlement à l'arête 44, suivant un pas P régulier, qui correspond à celui des pattes de retenue 22 de l'aile de fixation 14, en étant chacune respectivement disposées au même niveau que celles-ci.

Ainsi qu'il est aisé de le comprendre, la pièce de support 57 peut être mise en place sur l'entretoise de support 13 suivant l'une ou l'autre de deux orientations différentes.

Suivant l'une de ces orientations, figure 11, sa patte de fixation 59 s'étend en direction opposée à l'aile de fixation 14 de cette entretoise de support 13, et suivant l'autre orientation, figure 12, elle s'étend au contraire en direction de cette aile de fixation 14, de l'autre côté de l'aile de support 15 par rapport à cette dernière.

Il en résulte que, dans l'un et l'autre cas, la patte de support 46 se situe à des niveaux différents par rapport à l'aile de fixation 14 de l'entretoise de support 13, et, donc, que le barreau 12 est implanté à des profondeurs différentes par rapport aux montants 11.

Dans tous les cas, le crochetage de la pièce de support 57 sur l'entretoise de support 13 suffit au maintien provisoire de cette pièce de support 57 sur cette entretoise de support 13, ce qui, comme précédemment, facilite la mise en place du barreau 12.

Dans la variante de réalisation représentée sur la figure 13, les montants 11 sont des profilés à section transversale en U dont l'une des ailes latérales forme la face avant 20 tandis que l'autre en forme la face arrière 23.

En pratique, ces montants 11 ont leurs concavités tournées en sens opposés l'une par rapport à l'autre, et les évidements 21 que présente leur face avant 20 pour l'embrochage d'entretoises de support 13 mordent légèrement sur leur partie médiane 65, pour faciliter cet embrochage.

Pour le reste, les dispositions sont du même type que les précédentes.

Dans la variante de réalisation représentée sur la figure 14, la patte de support 46 des entretoises de support 13 appartient, comme dans la forme de réalisation représentée sur les figures 9 à 12, à une pièce de support 57 distincte de leur aile de support 15, mais cette pièce de support 57 est montée réglable en position sur cette aile de support 15, à la faveur d'une coulisse 66 prévue à cet effet sur celle-ci, perpendiculairement à l'aile de fixation 14.

En pratique, cette pièce de support 57 comporte, comme précédemment, en équerre, deux pattes, à savoir, d'une part, la patte de support 46, qui présente un perçage taraudé 47, et, éventuellement, comme représenté, deux ergots 49, et, d'autre part, une patte de fixation 67, qui, pour son réglage en position sur l'aile de support 15, est en prise avec la coulisse 66 de celle-ci.

Bien entendu, des moyens de blocage en position peuvent être prévus.

Ces moyens de blocage en position relevant de l'homme de l'art, ils n'ont pas été représentés sur la figure 14, et ils ne seront pas décrits ici.

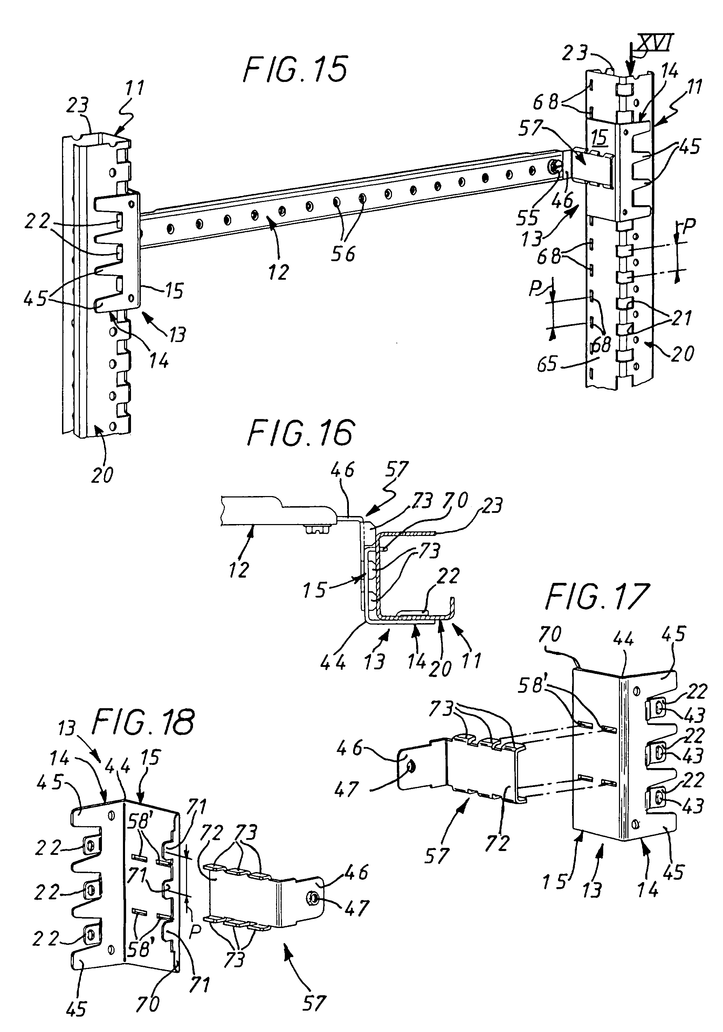

La variante de réalisation représentée sur les figures 15 à 17 est plus particulièrement destinée au support d'équipements lourds.

Les montants 11 sont du type de ceux décrits en référence à la figure 13.

Ils comportent cependant, en sus, de place en place, sur leur partie médiane 65, suivant un pas P régulier qui correspond en pratique à celui des évidements 21 de leur face avant 20, des boutonnières 68, de contour rectangulaire.

En pratique, ces boutonnières 68 sont alignées les unes avec les autres, suivant leur longueur, et parallèlement à la direction d'allongement des montants 11, au voisinage de l'arête que forment entre elles la partie médiane 65 et la face arrière 23 de ceux-ci.

Le barreau 12 est du type de celui décrit en référence à la figure 8.

Il s'agit donc d'une traverse à perçages taraudés 56.

Chacune des entretoises de support 13 comporte, sous forme de pièce distincte, une pièce de support 57, à laquelle appartient, comme dans les formes de réalisation décrites en référence aux figures 9 à 12 et 14, la patte de support 46 de son aile de support 15, et qui est destinée à être emboîtée sur cette aile de support 15 à la faveur de boutonnières 58' prévues à cet effet sur celle-ci.

Mais, dans la forme de réalisation représentée, cette aile de support 15 est destinée à s'étendre vers l'arrière par rapport à l'aile de fixation 14, pour prendre appui sur la partie médiane 65 des montants 11.

De ce fait, les pattes de retenue 22 de l'aile de fixation 14 se situent du même côté de cette aile de fixation 14 que l'aile de support 15.

Autrement dit, le sens de leur décalage est inverse du précédent.

Conjointement, au lieu de faire saillie du côté de l'aile de support 15, le bossage 43 de ces pattes de retenue 22 fait saillie du côté opposé à celle-ci.

Pour l'emboîtement de la pièce de support 57, l'aile de support 15 présente des boutonnières 58', qui sont allongées perpendiculairement à l'arête 44, suivant deux rangs, à raison de deux par rang.

En outre, pour appui sur la partie médiane 65 d'un montant 11, l'aile de support 15 présente, le long de son bord libre, c'est-à-dire le long de son bord opposé à l'arête 44, un retour en équerre 70, avec, de place en place, en saillie sur la tranche de celui-ci, suivant un pas P régulier qui correspond à celui des boutonnières 68 de cette partie médiane 65, des ergots 71.

Dans la forme de réalisation représentée, la pièce de support 57 comporte, en équerre l'une par rapport à l'autre, deux pattes, à savoir, d'une part, la patte de support 46, qui, comme précédemment, présente un perçage taraudé 47, et, d'autre part, une patte de fixation 72, qui, pour son emboîtement sur l'aile de support 15, présente, latéralement, le long de chacun de ses bords, à l'écartement des boutonnières 58' de cette aile de support 15, des ergots 73, pliés à l'équerre en direction opposée à la patte de support 46.

En pratique, dans la forme de réalisation représentée, trois ergots 73 sont prévus le long de chacun des bords de la patte de fixation 72 de la pièce de support 57, cette pièce de support 57 venant se caler par le troisième sur le retour en équerre 70 de l'aile de support 15.

Comme précédemment, la mise en place du barreau 12 de l'une à l'autre de deux entretoises de support 13 verrouille l'ensemble sur les montants 11.

Dans la variante de réalisation représentée sur les figures 19 et 20, le châssis de support 10 suivant l'invention comporte un tableau 75, de contour globalement rectangulaire, qui s'étend de l'un à l'autre de deux montants 11 du type de ceux décrits en référence aux figures 1 à 9, et dont l'un au moins des bords d'extrémité 76 correspondants est ondulé, ainsi qu'il est mieux visible à la figure 20, pour son embrochage sur les pattes 30 d'un tel montant 11.

Dans la forme de réalisation représentée, seul l'un des bords d'extrémité 76 du tableau 75 est ainsi ondulé.

Son autre bord d'extrémité 77 est rectiligne, mais il est prévu, à son voisinage, des perçages 78 pour le passage de moyens de fixation, des vis ou des boulons par exemple, propres à son assujettissement au montant 11 concerné.

Le tableau 75 présente, localement, au moins un bossage 79, à niveau avec la patte de support 46 d'une entretoise de support 13.

Par exemple, et tel que représenté, deux bossages 79 sont prévus, à distance l'un de l'autre, parallèlement aux bords d'extrémité 76, 77.

Ils permettent l'implantation de deux barreaux 12, qui s'étendent chacun entre une entretoise de support 13 et un tel bossage 79.

## Revendications

1. Châssis de support, notamment pour appareillages électriques, comportant, d'une part, deux montants (11), qui sont globalement parallèles l'un à l'autre, et, d'autre part, au moins un barreau (12), qui s'étend globalement transversalement, par rapport auxdits montants (11), avec, pour l'assujettissement du barreau (12) à l'un, au moins, de ses montants (11), une entretoise de support (13) comportant, globalement, en équerre l'une par rapport à l'autre, deux ailes, à savoir, une aile de fixation (14), par laquelle elle est assujettie audit montant (11), et une aile de support (15), à laquelle est assujetti ledit barreau (12), le montant (11) présentant une face avant (20) ajourée localement d'au moins un évidement (21), et l'aile de fixation (14) de l'entretoise de support (13) comportant au moins une patte de retenue (22), qui, pour le crochetage de l'entretoise de support (13) sur le montant (11), est engagée sous la face avant (20) dudit montant (11) à la faveur de l'évidement (21) de celle-ci, caractérisé en ce que, parallèlement à la patte de retenue (22), l'aile de fixation (14) de l'entretoise de support (13) comporte au moins une patte de maintien (45), qui s'étend dans le même sens que la patte de retenue (22) et par laquelle l'entretoise de support (13) porte sur la face avant (20) du montant (11).

2. Châssis de support suivant la revendication 1, caractérisé en ce que l'aile de support (15) de l'entretoise de support (13) s'étend globalement transversalement par rapport au barreau (12).

3. Châssis de support suivant l'une quelconque des revendications 1, 2, caractérisé en ce que la patte de retenue (22) de l'aile de fixation (14) de l'entretoise de support (13) est décalée transversalement par rapport au plan de cette aile de fixation (14).

4. Châssis de support suivant l'une quelconque des revendications 1 à 3, caractérisé en ce que, de sa racine (40) à son extrémité libre (42), la patte de retenue (22) s'étend dans le sens opposé au barreau (12).

5. Châssis de support suivant l'une quelconque des revendications 1 à 4, caractérisé en ce que, pour contact avec le montant (11), la patte de retenue (22) présente, en saillie, sur sa surface tournée vers la surface arrière de la face avant (20) dudit montant (11), au moins un bossage (43).

6. Châssis de support suivant l'une quelconque des revendications 1 à 5, caractérisé en ce que la patte de maintien (45) s'étend suivant le plan de l'aile de fixation (14), en prolongeant localement celle-ci.

7. Châssis de support suivant l'une quelconque des revendications 1 à 6, caractérisé en ce que l'aile de fixation (14) de l'entretoise de support (13) présente plusieurs pattes de retenue (22) alignées parallèlement à l'arête (44) qu'elle forme avec l'aile de support (15).

8. Châssis de support suivant les revendications 5 et 7, prises conjointement, caractérisé en ce que chaque patte de retenue (22) est encadrée par deux pattes de maintien (45).

9. Châssis de support suivant l'une quelconque des revendications 1 à 8, caractérisé en ce que l'aile de fixation (14) de l'entretoise de support (13) s'étend dans le sens opposé au barreau (12).

10. Châssis de support suivant l'une quelconque des revendications 1 à 9, caractérisé en ce que, pour la fixation d'un barreau (12), l'aile de support (15) de l'entretoise de support (13) comporte en saillie une patte de support (46).

11. Châssis de support suivant la revendication 10, caractérisé en ce que la patte de support (46) est d'un seul tenant avec l'aile de support (15) qui la porte.

12. Châssis de support suivant la revendication 10, caractérisé en ce que la patte de support (46) appartient à une pièce de support (57) qui, distincte de l'aile de support (15) qui la porte, est crochetée sur cette aile de support (15) à la faveur d'une boutonnière (58) prévue à cet effet sur celle-ci.

13. Châssis de support suivant la revendication 12, caractérisé en ce que la pièce de support (57) comporte, en équerre l'une par rapport à l'autre, deux pattes, à savoir, d'une part, la patte de support (46), et, d'autre part, une patte de fixation (59), qui, pour son crochetage sur l'aile de support (15), présente un retour (60) formant localement un crochet (62).

14. Châssis de support suivant la revendication 10, caractérisé en ce que la patte de support (46) appartient à une pièce de support (57) qui, distincte de l'aile de support (15) qui la porte, est montée réglable en position sur cette aile de support (15) à la faveur d'une coulisse (66) prévue à cet effet sur celle-ci, perpendiculairement à l'aile de fixation (14).

15. Châssis de support suivant la revendication 14, caractérisé en ce que la pièce de support (57) comporte, en équerre, deux pattes, à savoir, d'une part, la patte de support (46), et, d'autre part, une patte de fixation (67), qui, pour son réglage en position sur l'aile de support (15), est en prise avec la coulisse (66) de celle-ci.

16. Châssis de support suivant la revendication 10, caractérisé en ce que la patte de support (46) appartient à une pièce de support (57) qui, distincte de l'aile de support (15) qui la porte, est emboîtée sur cette aile de support (15) à la faveur de boutonnières (58') prévues à cet effet sur celle-ci.

17. Châssis de support suivant la revendication 16, caractérisé en ce que la pièce de support (57) comporte, en équerre l'une par rapport à l'autre, deux pattes, à savoir, d'une part, la patte de support (46), et, d'autre part, une patte de fixation (72), qui, pour son emboîtement sur l'aile de support (15), présente, latéralement, le long de chacun de ses bords, des ergots (73) pliés à l'équerre en direction opposée à la patte de support (46).

18. Châssis de support suivant l'une quelconque des revendications 10 à 17, caractérisé en ce que, outre un perçage taraudé (47), la patte de support (46) présente en saillie au moins un ergot (49), pour l'emboîtement local du barreau (12).

19. Châssis de support suivant l'une quelconque des revendications 10 à 18, caractérisé en ce que l'aile de support (15) de l'entretoise de support (13) comporte localement au moins un prolongement (52) qui s'étend au-delà de la patte de support (46) par rapport à son aile de fixation (14).

20. Châssis de support suivant l'une quelconque des revendications 1 à 19, caractérisé en ce que la face avant (20) du montant (11) présente suivant un pas (P) régulier une pluralité d'évidements (21) alignés suivant sa direction d'allongement.

21. Châssis de support suivant la revendication 20, caractérisé en ce que les évidements (21) de la face avant (20) du montant (11) alternent avec des perçages (27).

22. Châssis de support suivant l'une quelconque des revendications 1 à 21, caractérisé en ce que le montant (11) est un profilé à section transversale en U, dont la partie médiane forme la face avant (20).

23. Châssis de support suivant l'une quelconque des revendications 1 à 21, caractérisé en ce que le montant (11) est un profilé à section transversale en U dont l'une des ailes latérales forme la face avant (20).

24. Châssis de support suivant l'une quelconque des revendications 1 à 22, caractérisé en ce que, le long de l'arête interne (26') de sa face avant (20), le montant (11) forme, localement, à la faveur d'une découpe (29), qui mord sur sa face latérale (25') interne, au moins une patte (30), qui, de sa racine (31) à son extrémité libre (32), s'étend en direction du montant (11) opposé.

25. Châssis de support suivant la revendication 24, caractérisé en ce que ladite patte (30) s'étend dans le plan de la face avant (20) du montant (11).

26. Châssis de support suivant l'une quelconque des revendications 24, 25, caractérisé en ce que l'une au moins des fentes (33) qui séparent latéralement ladite patte (30) des flancs de la découpe (29) à la faveur de laquelle elle est formée présente localement un épanouissement formant globalement un perçage (34).

27. Châssis de support suivant l'une quelconque des revendications 24 à 26, caractérisé en ce que le montant (11) présente suivant un pas (P) régulier une pluralité de pattes (30) alignées suivant sa direction d'allongement.

28. Châssis de support suivant l'une quelconque des revendications 1 à 27, caractérisé en ce que le barreau (12) s'étend de l'un à l'autre des deux montants (11) en étant assujetti à chacun d'eux par une entretoise de support (13) à ses extrémités.

29. Châssis de support suivant la revendication 27, caractérisé en ce qu'il comporte un tableau (75) dont l'un au moins des bords d'extrémité (76) est ondulé pour son embrochage sur les pattes (30) d'un montant (11).

30. Châssis de support suivant la revendication 29, caractérisé en ce que le tableau (75) présente au moins un bossage (79) permettant l'implantation d'un barreau (12) qui s'étend entre une entretoise de support (13) et un tel bossage (79).

31. Châssis de support suivant l'une quelconque des revendications 1 à 30, caractérisé en ce qu'il est associé à l'entretoise de support (13) un gabarit de positionnement (54) qui lui est rapporté de manière amovible.

## Patentansprüche

1. Traggestell insbesondere für elektrische Geräte, bestehend einerseits aus zwei Ständern (11), die im wesentlichen zueinander parallel sind, und andererseits aus mindestens einer Schiene (12), die sich im wesentlichen quer zu den Ständern (11) erstreckt, wobei zur Anbringung der Schiene (12) an mindestens einem seiner Ständer (11) ein Tragsteg (13) vorgesehen ist, der im wesentlichen rechtwinklig zueinander zwei Schenkel aufweist, und zwar einen Befestigungsschenkel (14) mit dem er an dem Ständer (11) angebracht ist, und einen Tragschenkel (15), an dem die Schiene (12) angebracht ist, wobei der Ständer (11) eine Vorderseite (20) aufweist, die örtlich mit mindestens einer Aussparung (21) versehen ist, und der Befestigungsschenkel (14) des Tragstegs (13) mindestens einen Rückhaltelappen (22) aufweist, der zum Einhaken des Tragstegs (13) an dem Ständer (11) durch eine Aussparung (21) des Ständers (11) unter dessen Vorderseite (20) eintritt, dadurch gekennzeichnet, daß der Befestigungsschenkel (14) des Tragstegs (13) parallel zum Rückhaltelappen (22) mindestens einen Haltelappen (45) aufweist, der sich in derselben Richtung wie der Rückhaltelappen (22) erstreckt und mit dem der Tragsteg (13) an der Vorderseite (20) des Ständers (11) anliegt.

2. Traggestell nach Anspruch 1, dadurch gekennzeichnet, daß der Tragschenkel (15) des Tragstegs (13) sich im wesentlichen quer zu der Schiene (12) erstreckt.

3. Traggestell nach einem der Ansprüche 1, 2, dadurch gekennzeichnet, daß der Rückhaltelappen (22) des Befestigungsschenkels (14) des Tragstegs (13) bezüglich der Ebene dieses Befestigungsschenkels (14) in Querrichtung versetzt ist.

4. Traggestell nach einem der Ansprüche 1 bis 3, dadurch gekennzeichnet, daß der Rückhaltelappen (22) sich von seiner Wurzel (40) zu seinem freien Ende (42) in der der Schiene (12) entgegengesetzten Richtung erstreckt.

5. Traggestell nach einem der Ansprüche 1 bis 4, dadurch gekennzeichnet, daß der Rückhaltelappen (22) für den Kontakt mit dem Ständer (11) vorstehend auf seiner der hinteren Fläche der Vorderseite (20) dieses Ständers (11) zugewandten Fläche mindestens eine Erhebung (43) aufweist.

6. Traggestell nach einem der Ansprüche 1 bis 5, dadurch gekennzeichnet, daß der Haltelappen (45) sich in der Ebene des Befestigungsschenkels (14) erstreckt, indem er diesen örtlich verlängert.

7. Traggestell nach einem der Ansprüche 1 bis 6, dadurch gekennzeichnet, daß der Befestigungsschenkel (14) des Tragstegs (13) mehrere Rückhaltelappen (22) aufweist, die parallel zu der Kante (44), die er mit dem Tragschenkel (15) bildet, in einer Linie liegen.

8. Traggestell nach den Ansprüche 5 und 7 zusammen, dadurch gekennzeichnet, daß jeder Rückhaltelappen (22) von zwei Haltelappen (45) umrahmt ist.

9. Traggestell nach einem der Ansprüche 1 bis 8, dadurch gekennzeichnet, daß der Befestigungsschenkel (14) des Tragstegs (13) sich in der der Schiene (12) entgegengesetzten Richtung erstreckt.

10. Traggestell nach einem der Ansprüche 1 bis 9, dadurch gekennzeichnet, daß der Tragschenkel (15) des Tragstegs (13) für die Befestigung einer Schiene (12) vorstehend einen Traglappen (46) aufweist.

11. Traggestell nach Anspruch 10, dadurch gekennzeichnet, daß der Traglappen (46) mit dem ihn tragenden Tragschenkel (15) einstückig ausgeführt ist.

12. Traggestell nach Anspruch 10, dadurch gekennzeichnet, daß der Traglappen (46) zu einem Tragteil (57) gehört, das von dem ihn tragenden Tragschenkel (15) getrennt ist und an diesem Tragschenkel (15) in ein zu diesem Zweck an diesem vorgesehenes Langloch (58) eingehakt ist.

13. Traggestell nach Anspruch 12, dadurch gekennzeichnet, daß das Tragteil (57) rechtwinklig zueinander zwei Lappen aufweist, und zwar einerseits den Traglappen (46) und andererseits einen Befestigungslappen (59), der für seine Einhakung an dem Tragschenkel (15) eine Abwinklung (60) besitzt, die örtlich einen Haken (62) bildet.

14. Traggestell nach Anspruch 10, dadurch gekennzeichnet, daß der Traglappen (46) zu einem Tragteil (57) gehört, das von dem ihn tragenden Tragschenkel (15) getrennt ist und auf diesem Tragschenkel (15) durch eine Gleitführung (66) verstellbar montiert ist, die zu diesem Zweck auf diesem senkrecht zum Befestigungsschenkel (14) vorgesehen ist.

15. Traggestell nach Anspruch 14, dadurch gekennzeichnet, daß das Tragteil (57) rechtwinklig zueinander zwei Lappen aufweist, und zwar einerseits den Traglappen (46) und andererseits einen Befestigungslappen (67), der für seine Verstellung auf dem Tragschenkel (15) mit dessen Gleitführung (66) in Eingriff ist.

16. Traggestell nach Anspruch 10, dadurch gekennzeichnet, daß der Traglappen (46) zu einem Tragteil (57) gehört, das von dem ihn tragenden Tragschenkel (15) getrennt ist und auf diesem Tragschenkel (15) in zu diesem Zweck auf diesem vorgesehene Langlöcher (58') eingesteckt ist.

17. Traggestell nach Anspruch 16, dadurch gekennzeichnet, daß das Tragteil (57) rechtwinklig zueinander zwei Lappen aufweist, und zwar einerseits den Traglappen (46) und andererseits einen Befestigungslappen (72), der für sein Aufstecken auf den Tragschenkel (15) seitlich längs jedes seiner Ränder Nasen (73) aufweist, die in zum Traglappen (46) entgegengesetzter Richtung rechtwinklig umgebogen sind.

18. Traggestell nach einem der Ansprüche 10 bis 17, dadurch gekennzeichnet, daß der Traglappen (46) abgesehen von einer Gewindebohrung (47) vorstehend mindestens eine Nase (49) zum örtlichen Aufstecken der Schiene (12) aufweist.

19. Traggestell nach einem der Ansprüche 10 bis 18, dadurch gekennzeichnet, daß der Tragschenkel (15) des Tragstegs (13) örtlich mindestens eine Verlängerung (52) aufweist, die sich bezüglich seines Befestigungsschenkels (14) jenseits des Traglappens (46) erstreckt.

20. Traggestell nach einem der Ansprüche 1 bis 19, dadurch gekennzeichnet, daß die Vorderseite (20) des Ständers (11) in einem regelmäßigen Schritt (P) eine Vielzahl von Aussparungen (21) aufweist, die gemäß der Richtung seiner Längserstreckung in einer Linie liegen.

21. Traggestell nach Anspruch 20, dadurch gekennzeichnet, daß die Aussparungen (21) der Vorderseite (20) des Ständers (11) mit Bohrungen (27) abwechseln.

22. Traggestell nach einem der Ansprüche 1 bis 21, dadurch gekennzeichnet, daß der Ständer (11) ein Profilteil mit U-Querschnitt ist, dessen mittlerer Teil die Vorderseite (20) bildet.

23. Traggestell nach einem der Ansprüche 1 bis 21, dadurch gekennzeichnet, daß der Ständer (11) ein Profilteil mit U-Querschnitt ist, von dem einer der seitlichen Schenkel die Vorderseite (20) bildet.

24. Traggestell nach einem der Ansprüche 1 bis 22, dadurch gekennzeichnet, daß der Ständer (11) längs der inneren Kante (26') seiner Vorderseite (20) örtlich in einem Ausschnitt (29), der sich in seine innere Seitenfläche (25') erstreckt, mindestens einen Lappen (30) bildet, der sich von seiner Wurzel (31) zu seinem freien Ende (32) in Richtung des entgegengesetzten Ständers (11) erstreckt.

25. Traggestell nach Anspruch 24, dadurch gekennzeichnet, daß der Lappen (30) sich in der Ebene der Vorderseite (20) des Ständers (11) erstreckt.

26. Traggestell nach einem der Ansprüche 24, 25, dadurch gekennzeichnet, daß mindestens einer der Schlitze (33), die diesen Lappen (30) seitlich von den Flanken des Ausschnitts (29) trennen, durch den er gebildet ist, örtlich eine im wesentlichen eine Bohrung (34) bildende Ausweitung aufweist.

27. Traggestell nach einem der Ansprüche 24 bis 26, dadurch gekennzeichnet, daß der Ständer (11) in einem regelmäßigen Schritt (P) eine Vielzahl von Lappen (30) aufweist, die gemäß der Richtung seiner Längserstreckung in einer Linie liegen.

28. Traggestell nach einem der Ansprüche 1 bis 27, dadurch gekennzeichnet, daß die Schiene (12) sich von einem der beiden Ständer (11) zum anderen erstreckt, indem sie an jedem von ihnen an ihren Enden durch einen Tragsteg (13) befestigt ist.

29. Traggestell nach Anspruch 27, dadurch gekennzeichnet, daß es eine Tafel (75) aufweist, von der mindestens einer der Endränder (76) für ihr Aufstecken auf die Lappen (30) eines Ständers (11) gewellt ist.

30. Traggestell nach Anspruch 29, dadurch gekennzeichnet, daß die Tafel (75) mindestens eine Erhebung (79) aufweist, die den Einbau einer Schiene (12) gestattet, die sich zwischen einem Tragsteg (13) und einer solchen Erhebung (79) erstreckt.

31. Traggestell nach einem der Ansprüche 1 bis 30, dadurch gekennzeichnet, daß dem Tragsteg (13) eine Positionierungslehre (54) zugeordnet ist, die an ihm abnehmbar befestigt ist.

## Claims

1. Supporting frame, particularly for electrical apparatuses, having on the one hand two uprights (11) which are substantially parallel to one another, and on the other hand at least one bar (12) which extends substantially transversely with respect to said uprights (11), having, for secure fixing of the bar (12) to at least one of said uprights (11), a supporting brace member (13) with, substantially at right-angles with respect to one another, two wings, namely one fixing wing (14) by means of which it is securely fixed to said upright (11), and one supporting wing (15) to which said bar (12) is securely fixed, the upright (11) having a front face (20) punched locally with at least one cut-out (21), and the fixing wing (14) of the supporting brace member (13) having at least one retaining leg (22) which, in order to hook the supporting brace member (13) onto the upright (11), is engaged on the front face (20) of said upright (11) by virtue of the cut-out (21) thereof, characterised in that parallel to the retaining leg (22), the fixing wing (14) of the supporting brace member (13) has at least one catch leg (45) which extends in the same direction as the retaining leg (22) and by means of which the supporting brace member (13) is supported on the front face (20) of the upright (11).

2. Supporting frame according to claim 1, characterised in that the supporting wing (15) of the supporting brace member (13) extends substantially transversely with respect to the bar (12).

3. Supporting frame according to any one of claims 1, 2, characterised in that the retaining leg (22) of the fixing wing (14) of the supporting brace member (13) is transversely offset with respect to the plane of said fixing wing (14).

4. Supporting frame according to any one of claims 1 to 3, characterised in that from its base (40) to its free end (42), the retaining leg (22) extends in the opposite direction to the bar (12).

5. Supporting frame according to any one of claims 1 to 4, characterised in that for contact with the upright (11), the retaining leg (22) has on its surface tamed towards the rear surface of the front face (20) of said upright (11), at least one boss (43).

6. Supporting frame according to any one of claims 1 to 5, characterised in that the catch leg (45) extends along the plane of the fixing wing (14) locally extending it.

7. Supporting frame according to one of claims 1 to 6, characterised in that the fixing wing (14) of the supporting brace member (13) has several retaining legs (22) aligned parallel to the edge (44) it forms with the supporting wing (15).

8. Supporting frame according to claims 6 and 7, taken together, characterised in that each retaining leg (22) is framed by two catch legs (45).

9. Supporting frame according to any one of claims 1 to 8, characterised in that the fixing wing (14) of the supporting brace member (13) extends in the opposite direction to the bar (12).

10. Supporting frame according to any one of claims 1 to 9, characterised in that, for fixing a bar (12), the supporting wing (15) of the supporting brace member (13) has a projecting supporting leg (46).

11. Supporting frame according to claim 10, characterised in that the supporting leg (46) is in a single piece with the supporting wing (15) which carries it.

12. Supporting frame according to claim 10, characterised in that the supporting leg (46) belonging to a supporting piece (57) which, separate from the supporting wing (15) which carries it, is hooked onto said supporting wing (15) by virtue of a slot (58) provided for this purpose thereupon.

13. Supporting frame according to claim 12, characterised in that the supporting piece (57) has two legs. at right-angles with respect to one another, namely, on the one hand, the supporting leg (46) and, on the other hand, a fixing leg (59) which for being hooked onto the supporting wing (15), has a return (60) locally forming a hook (62).

14. Supporting frame according to claim 10, characterised in that the supporting leg (46) belongs to a supporting piece (57) which, separately from the supporting wing (15) which carries it, is mounted such as to be adjustable in its position on said supporting wing (15) by virtue of a slide (6) provided for this purpose thereupon, perpendicularly to the fixing wing (14).

15. Supporting frame according to claim 14, characterised in that the supporting piece (57) has two legs at right-angles, namely one fixing leg (67) which, for adjusting its position on the supporting wing (15), is engaged with the slide (66) thereof.

16. Supporting frame according to claim 10, characterised in that the supporting leg (46) belonging to a supporting piece (57) which, separately from the supporting wing (15) which carries it, is inserted into this supporting wing (15) by virtue of slots (58') provided for this purpose thereupon.

17. Supporting frame according to claim 16, characterised in that the supporting piece (57) has, at right-angles to one another, on the one hand the supporting leg (46) and, on the other hand, a fixing leg (72) which for inserting it in the supporting wing (15) has laterally, along each of its edges, toes (73) bent at right-angles in the opposite direction to the supporting leg (46).

18. Supporting frame according to any one of claims 10 to 17, characterised in that apart from a tapped bore (47), the supporting leg has at least one projecting toe (49) for local insertion of the bar (12).

19. Supporting frame according to any one of claims 10 to 18, characterised in that the supporting wing (15) of the supporting brace member (13) locally has at least one extension (52) which extends beyond the supporting leg (46) with respect to its fixing wing (14).

20. Supporting frame according to any one of claims 1 to 19, characterised in that the front face (20) of the upright (11) has a plurality of cut-outs (21), according to a length apart P, aligned according to the direction of extent of said upright.

21. Supporting frame according to claim 20, characterised in that the cut-outs (21) in the front face (20) of the upright (11) alternate with the bores (27).

22. Supporting frame according to any one of claims 1 to 21, characterised in that the upright (11) is a section with a U-shaped cross-section, the median part of which forms the front face (20).

23. Supporting frame according to any one of claims 1 to 21, characterised in that the upright (11) is a section with a U-shaped cross-section, one of the lateral wings of which forms the front face (20).

24. Supporting frame according to any one of claims 1 to 22, characterised in that along the internal edge (26') of its front face (20), the upright (11) locally forms, by virtue of a cut-out (29), which cuts into its lateral internal face (25'). at least one leg (30) which extends from its base (31) to its free end (32) in the opposite direction to the upright (11).

25. Supporting frame according to claim 24, characterised in that said leg (30) extends in the plane of the front face (20) of the upright (11).

26. Supporting frame according to any one of claims 24, 25, characterised in that at least one of the apertures (33) which laterally separate said leg (30) from the edges of the cut-out (29) by virtue of which it is formed, locally has a splay substantially forming a bore (34).

27. Supporting frame according to one of claims 24 to 26, characterised in that the upright (11) has a plurality of legs (30) aligned according to the direction if its extent, according to a regular length apart P.

28. Supporting frame according to any one of claims 1 to 27, characterised in that the bar (12) extends from one to the other of the two uprights (11) while being securely fixed to each of them by a supporting brace member (13) at its extremities.

29. Supporting frame according to claim 27, characterised in that it has panel (75), at least one of the end edges (76) of which is corrugated for engaging with the legs (30) of an upright (11).

30. Supporting frame according to claim 29, characterised in that the panel (75) has at least one boss (79) allowing a bar (12) to be inserted, which bar (12) extends between a supporting brace member (13) and such a boss (79).

31. Supporting frame according to any one of claims 1 to 30, characterised in that a positioning template (54) is connected to the supporting brace member (13), which template is fixed thereto in a removable manner.
